# EUROPEAN PATENT APPLICATION

(11) **EP 1 274 027 A1**
(43) Date of publication of application: **08.01.2003**
(21) Application number: 01310307.2
(22) Date of filing: 10.12.2001
(51) Int. Cl.: G06F 17/60

(54) **Method and program for delivering messages**

(30) Priority: 04.07.2001 JP 2001203348
(71) Applicant: FUJITSU LIMITED, Kawasaki-shi, Kanagawa 211-8588 (JP)
(72) Inventor: Nakamura, Mitsutaka, c/o Fujitsu Limited, Kawasaki-shi, Kanagawa 211-8588 (JP)
(74) Representative: Mohun, Stephen John

(57) **Abstract**

A method for delivering messages in which an electronic message sent from a sender to a receiver is delivered at the same time as an article or directly after an article being delivered and in which an electronic message delivered at the same time as an article can be updated. The method includes the step of accepting an article to be delivered, the step of accepting an electronic message by associating it with the article, and the step of sending the electronic message associated with the article to a receiver of the article in the case of receiving notification that delivery of the article is completed. Furthermore, the above method comprises the step of accepting an article to be delivered, the step of accepting an electronic message by associating it with the article, and the step of permitting updating the electronic message associated with the article before receiving notification that delivery of the article is completed.

## Description

### BACKGROUND OF THE INVENTION

### (1) Field of the Invention

This invention relates to a method for delivering electronic messages that is performed at the time of articles being delivered and to a program for delivering messages.

### (2) Description of the Related Art

When a person presents a gift to another person, he/she usually sends a message along with an article or sends a message at the right time after sending an article. Methods for sending a message and article at the same time that are widely used are as follows. A Sender, who sends an article, accompanies an article with a card etc. on which a message is written. Or an article distributor or transportation company packs a card, on which set formulas are printed in advance, along with an article at the request of a sender. Or a sender requests a shop to deliver an article and sends a postcard etc. to the receiver of the article later on.

Recently it has become possible to send animations and voice by electronic mail. If a person uses such electronic mail, he/she can, for example, let his/her relatives who live remote know how his/her children have grown or send congratulations, which are expressed with his/her voice and gestures and recorded, as a message easily. However, if a person wants to send a message card, like the above one, which should reach at almost the same time as an article, he/she himself/herself must perform operation for sending electronic mail at the time of sending the article or at the right time after sending the article.

With these methods, however, the time when an article actually reaches a receiver does not necessarily coincide with the time when electronic mail reaches the receiver. That is to say, electronic mail can reach a receiver a long time before an article reaching the receiver or, in contrast with this, electronic mail can reach a receiver a long time after an article reaching the receiver. Therefore, unlike a message card attached to an article, it has been very difficult to deliver an electronic message at the same time as an article.

Furthermore, with previously considered methods, once an article is given to a delivery company, the contents of a message packed along with it cannot be changed in spite of the message not having been delivered to a receiver. Accordingly, for example, by the time an article actually reaches a receiver, the compliments of the season that were suitable at the time of a sender giving it to a delivery company can be out of season.

The present invention was made under the background circumstances as described above. Embodiments of the present invention aim to deliver an electronic message sent from a sender to a receiver at the same time as an article or directly after an article is delivered. Another aim is to make it possible to update an electronic message delivered at the same time as an article.

Amethod for delivering messages according to the present invention comprises the step of accepting an article to be delivered, the step of accepting an electronic message by associating it with the article, and the step of sending the electronic message associated with the article to a receiver of the article in the case of receiving notification that delivery of the article is completed.

The method for delivering messages according to the present invention enables the management of an electronic message by associating it with an article and to send the electronic message at the time of delivery of the article being completed.

Moreover, a method for delivering a message according to the present invention comprises the step of accepting an article to be delivered, the step of accepting an electronic message by associating it with the article, and the step of permitting updating the electronic message associated with the article before receiving notification that delivery of the article is completed.

The method for delivering a message according to the present invention enables the updating of a registered electronic message before it is sent to a receiver.

Preferred embodiments of the present invention will now be described, by way of example only, with reference to the accompanying drawings, in which:
Fig. 1 is a view showing the structure of a system for realizing the present invention.
Fig. 2 is an example of package data.
Fig. 3 is an example of delivery data.
Fig. 4 is a flow chart for describing a first example of the present invention.
Fig. 5 is a flow chart for describing a second example of the present invention.
Fig. 6 is a flow chart showing a process for updating a message in the first example of the present invention.
Fig. 7 is a flow chart showing a process for updating a message in the second example of the present invention.
Fig. 8 is a view for describing the flow of the whole of the present invention.

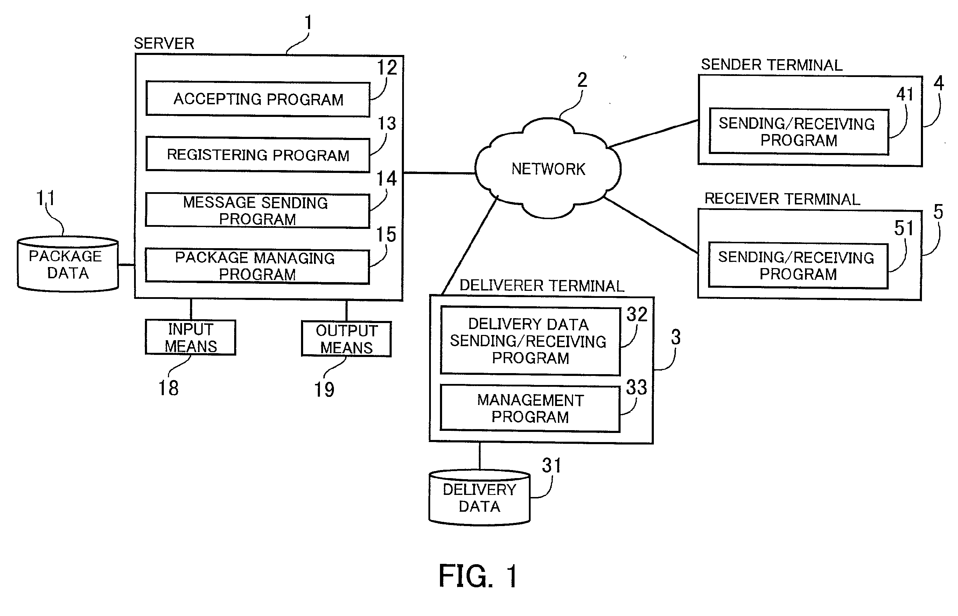

An embodiment of the present invention will now be described with reference to the drawings. Fig. 1 is a view showing the structure of a system for realizing the present invention. As shown in Fig. 1, the system of this embodiment comprises a server 1 being a server computer (server), a deliverer terminal 3 being a computer carried by a deliverer who delivers an article, a sender terminal 4 being a computer operated by a person who sends an article, a receiver terminal 5 being a computer operated by a person who receives an article, and a network 2, such as the Internet, which connects the above components with one another. The network 2 can be a wireless network, such as the Bluetooth.

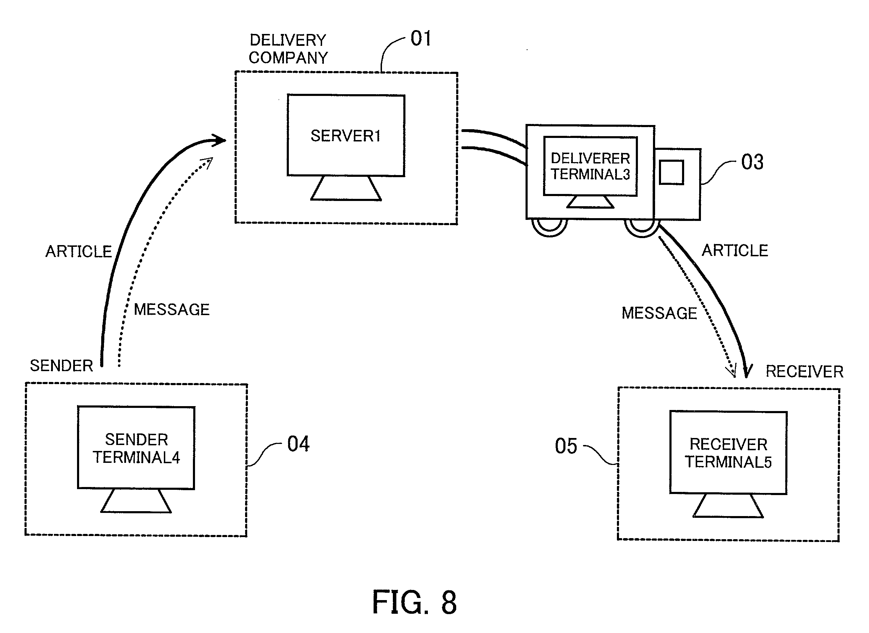

In practice the structure of the system shown in Fig. 1 will be realized in a form, for example, shown in Fig. 8.

As shown in Fig. 8, the server 1 and deliverer terminal 3 are managed by a delivery company 01 that delivers an article. The deliverer terminal 3 is carried by a deliverer 03. The sender terminal 4 is used by a sender 04 who requests a delivery company to deliver an article. The receiver terminal 5 is used by a receiver 05 to whom an article,delivery of which was requested by the sender 04,is sent. Information regarding an article, delivery of which was requested by the sender 04,and text data, image data, such as dynamic and static images, voice data, and the like, being an electronic message given from the sender terminal 4, are managed by the server 1 installed in the delivery company 01. An article is delivered to the receiver 05 by the deliverer 03 . An electronic message is delivered to the receiver terminal 5 by the server 1 or deliverer terminal 3.

The server 1 shown in Fig. 1 is a computer for associating an article,delivery of which is requested by a sender,with an electronic message given by the sender to send at the time of the article being delivered and for managing them. The server 1 stores an accepting program 12, a registering program 13, a message sending program 14, and a package managing program 15 and includes package data 11, input means 18, and output means 19.

The accepting program 12 is used to accept an electronic message sent from the sender terminal 4. The registering program 13 is used to register an electronic message sent from the sender terminal 4 with the package data 11 and to update data which has already been registered in response to a request to update sent from the sender terminal 4.

The message sending program 14 is used to know the time when an article was delivered to a receiver in order to send an electronic message associated with the article to the receiver terminal 5. In addition, the message sending program 14 is used to send an electronic message associated with an article to the deliverer terminal 3 along with information regarding the article in the case of a deliverer performing shipping processes, such as loading the article to deliver. The package managing program 15 is used to manage information regarding an article to be delivered.

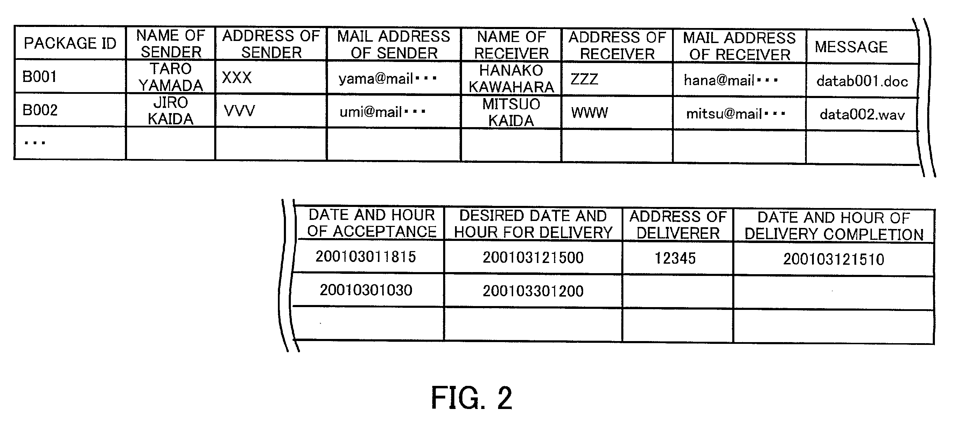

The package data 11 is a data file for managing information regarding an article given by a sender and an electronic message sent from the sender terminal 4 and holds data, for example, shown in Fig. 2.

As shown in Fig. 2, in the package data 11, various pieces of information, such as Package ID, Name of Sender, Address of Sender, Mail Address of Sender, Name of Receiver, Address of Receiver, Mail Address of Receiver, Message, Date and Hour of Acceptance, Desired Date and Hour for Delivery, Address of Deliverer, and Date and Hour of Delivery Completion, are managed. Package ID is an identifier for an article delivery of which is requested by a sender. Name of Sender is the name of a person who sends an article. Address of Sender is the address of a person who sends an article. Mail Address of Sender is the electronic mail address of a person who sends an article. Name of Receiver is the name of a person who receives an article. Address of Receiver is the address of a person who receives an article, that is to say, the destination of an article. Mail Address of Receiver is the electronic mail address of a person who receives an article. Message is electronic message data sent from a sender to a receiver. Date and Hour of Acceptance is the date and hour of the accepting of a request to deliver an article. Desired Date and Hour for Delivery is specified by a sender or receiver. Address of Deliverer is the address of the deliverer terminal 3 carried by a deliverer who should deliver an article. Date and Hour of Delivery Completion is the date and hour of the completing of delivery of an article. With Address of Deliverer, the address of the deliverer terminal 3 does not need to be specified directly. For example, the method of holding additional data that associates an identifier for a deliverer with the address of the deliverer terminal 3 carried by the deliverer and registering the identifier for the deliverer with the package data 11 can be adopted.

Package ID, Name of Sender, Address of Sender, Name of Receiver, Address of Receiver, and Date and Hour of Acceptance are registered at the time of accepting a request to deliver an article. Mail Address of Receiver and Message are registered at the time of accepting an electronic message. Mail Address of Sender and Desired Date and Hour for Delivery can be registered at any time. Address of Deliverer is registered at the time of instructions for shipping being issued. Date and Hour of Delivery Completion is registered at the time of receiving notification from the deliverer terminal 3 that delivery is completed.

The package data 11 enables the server 1 to manage articles and electronic messages by associating them and to judge when to deliver electronic messages.

The input means 18 is used to input data to the server 1 and to give instructions to the server 1. The input means 18 is an input device, such as a keyboard or mouse, connected to a computer. The output means 19 is an output device, such as a display, printer, or speaker, connected to a computer.

The deliverer terminal 3 is a computer carried by a deliverer who delivers articles, and can be a personal computer or a portable terminal, such as a hand-held terminal. The deliverer terminal 3 stores a delivery data sending/receiving program 32, a management program 33, and delivery data 31. Moreover, the deliverer terminal 3 includes input means and output means (not shown). In addition, the deliverer terminal 3 may store other programs and the like a deliverer needs to deliver articles.

The delivery data sending/receiving program 32 is used to transfer data between the server 1 and deliverer terminal 3 or between the receiver terminal 5 and deliverer terminal 3. That is to say, the delivery data sending/receiving program 32 is used to receive information regarding an article to be delivered and an electronic message from the server 1 and to send information regarding the completing of delivery of an article to the server 1. Moreover, the delivery data sending/receiving program 32 is used to send an electronic message to the receiver terminal 5.

The management program 33 is used to store information regarding an article to be delivered and electronic messages, which the delivery data sending/receiving program 32 receives from the server 1, and information regarding the completing of delivery, which a deliverer inputs, in the delivery data 31.

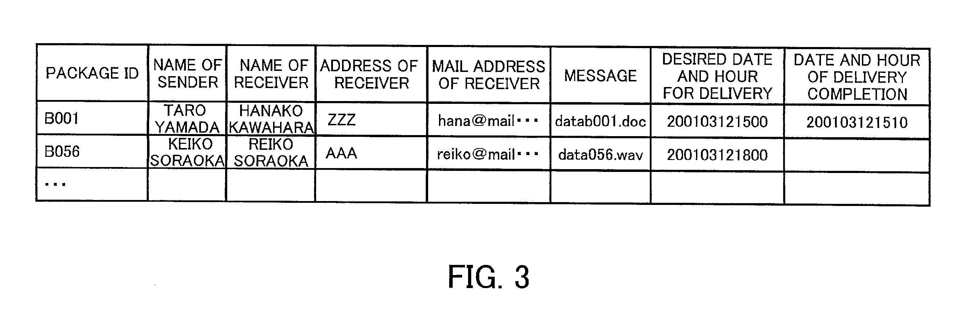

The delivery data 31 is a data file for managing information regarding articles to be delivered, electronic messages, etc. and holds data, for example, shown in Fig. 3.

As shown in Fig. 3, in the delivery data 31, various pieces of information, such as Package ID, Name of Sender, Name of Receiver, Address of Receiver, Mail Address of Receiver, Message, Desired Date and Hour for Delivery, and Date and Hour of Delivery Completion, are managed. Package ID is an identifier for an article delivery of which is requested by a sender. Name of Sender is the name of a person who sends an article. Name of Receiver is the name of a person who receives an article. Address of Receiver is the address of a person who receives an article, that is to say, the destination of an article. Mail Address of Receiver is the electronic mail address of a person who receives an article. Message is electronic message data sent from a sender to a receiver. Desired Date and Hour for Delivery is specified by a sender or receiver. Date and Hour of Delivery Completion is the date and hour of the completing of delivery of an article.

Package ID, Name of Sender, Name of Receiver, Address of Receiver, Mail Address of Receiver, Message, Desired Date and Hour for Delivery are received by the delivery data sending/receiving program 32 from the server 1. These pieces of data are the same as those of an article with the same package ID stored in the package data 11 on the server 1. This article should be delivered by a deliverer who carries the deliverer terminal 3. Date and Hour of Delivery Completion is registered at the time of accepting information regarding the completing of delivery which a deliverer inputs by the use of the input means after delivering an article.

The delivery data 31 enables the deliverer terminal 3 to manage electronic messages to be sent to receivers and the completing of delivery of each article.

The sender terminal 4 is a computer used by a sender to register an electronic message. The receiver terminal 5 is a computer used by a receiver to receive an electronic message. The sender terminal 4 and receiver terminal 5 may be personal computers or cellular telephones or personal digital assistants with a communication facility.

The sender terminal 4 stores a sending/receiving program 41 and includes input and output means (not shown). The sending/receiving program 41 is used to send the server 1 an electronic message to be delivered along with an article, to send the server 1 a request to update an electronic message, and to receive notification of a package ID from the server 1.

The receiver terminal 5 stores a sending/receiving program 51 and includes input and output means (not shown) . The sending/receiving program 51 is used to receive an electronic message from the server 1 and deliverer terminal 3. The sending/receiving programs 41 and 51 may be mailer programs which are usually used to treat electronic mail.

The input means included in the sender terminal 4 is used to input data to the sender terminal 4 and to give instructions to the sender terminal 4. The input means included in the receiver terminal 5 is used to input data to the receiver terminal 5 and to give instructions to the receiver terminal 5. The input means included in the sender terminal 4 and receiver terminal 5 is an input device, such as a keyboard or mouse, connected to a computer. The output means included in the sender terminal 4 and receiver terminal 5 is an output device, such as a display, printer, or speaker, connected to a computer.

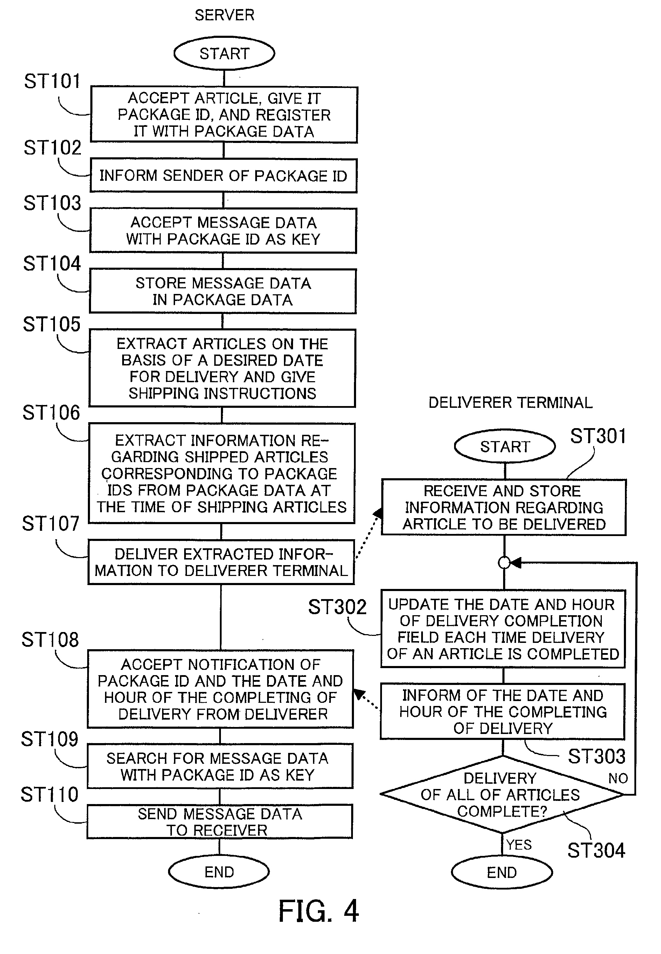

Now, operation in the present invention will be described with reference to flow charts shown in Figs. 4 through 7.

Fig. 4 is a flow chart for describing a first example in which the server 1 and deliverer terminal 3 according to the present invention work together to perform a process from accepting a request to deliver an article to delivering an electronic message to a receiver.

In ST101, the accepting program 12 on the server 1 accepts information regarding an article, delivery of which is requested by a sender, gives it a new package ID, and registers the package ID, the name of the sender, the address of the sender, the name of the receiver of the article, and the address of the receiver, that is to say, the address of the destination of the article with the package data 11. The date and hour of the accepting of a request to deliver the article is registered as Date and Hour of Acceptance. If a desired date and hour for delivery of the article is specified, it is also registered along with the above data.

In ST102, in order to confirm that the request to deliver the article was accepted, the accepting program 12 informs the sender of the package ID which was associated with the accepted article and registered. If the sender makes a request to deliver the article by bringing it into a delivery company's business office, the person in charge of the delivery company can inform the sender of the package ID the accepting program 12 outputs via the output means 19. If the sender makes a request via the sender terminal 4 to deliver the article, the sender can be informed of the package ID by the accepting program 12 sending the package ID via the network 2 and by the sending/receiving program 41 on the sender terminal 4 receiving the package ID.

In ST103, the accepting program 12 accepts the package ID and electronic message data to be delivered along with an article identified by the package ID. In ST104, the registering program 13 searches the package data 11 with the accepted package ID as a key and registers the accepted electronic message data in the Message field corresponding to the package ID.

A desired date and hour for delivery can be registered when it is specified by a sender or receiver. A desired date and hour for delivery can be updated when a new desired date and hour for delivery is specified by a sender or receiver. If a sender or receiver does not specify a desired date and hour for delivery, the server 1 can register a desired date and hour for delivery properly. If a sender or receiver does not specify a new desired date and hour for delivery, the server 1 can update a desired date and hour for delivery properly.

By performing the process of ST101 through ST 104, information regarding an article delivery of which is requested and electronic message data to be delivered along with the article are associated and registered with the package data 11. There can be a time interval between ST102 and ST103. For example, after a request to deliver an article is accepted, that is to say, after ST101 and ST102 are completed, the process is terminated for a time. When the package ID of the article and electronic message data to be delivered along with the article are accepted another day, the process of ST103 and ST104 can be performed.

In ST105, the package managing program 15 extracts information regarding articles,the desired dates for delivery of which have been designated as the day from the package data 11, and gives instructions on the basis of the extracted information to ship these articles. Information regarding the articles to be delivered and information regarding deliverers who should deliver the articles will be given by the shipping instructions. On the basis of the shipping instructions, the registering program 13 registers the address of the deliverer terminal 3 carried by a deliverer who delivers an article in the Address of Deliverer field in the package data 11 corresponding to the article.

In ST105, the process of assigning these articles to delivery vehicles or deliverers and the like will be performed as processes related to practical delivery. These processes are the same as operations usually conducted by delivery companies, so detailed descriptions of them will be omitted.

In ST105, the package managing program 15 gives the instructions to ship the articles, then, in ST106, the message sending program 14 detects the instructions to ship the articles and extracts package IDs, the names of senders, the names of receivers, the addresses of the receivers, and desired dates and hours for delivery as information regarding the articles from the package data 11 with package IDs included in the shipping instructions as keys. In ST107, the message sending program 14 sends this information to the deliverer terminal 3 of each deliverer on the basis of information for identifying deliverers included in the shipping instructions. In ST301, the delivery data sending/receiving program 32 on the deliverer terminal 3 receives the information sent by the message sending program 14 in ST107 and the management program 33 stores the information received by the delivery data sending/receiving program 32 in the delivery data 31.

Between ST107 and ST108 on the server 1 side, practical delivery operations will be conducted by a deliverer through the process of ST301 through ST304 on the deliverer terminal 3 side.

A deliverer delivers articles on the basis of information regarding delivery received in ST301. In ST302, each time delivery of an article is completed, the deliverer terminal 3 carried by a deliverer accepts information for specifying the article and information indicating the date and hour of the completing of delivery of the article. The management program 33 updates the Date and Hour of Delivery Completion field of the article in the delivery data 31 to the date and hour of the completing of the delivery the deliverer terminal 3 accepted. In ST303, the delivery data sending/receiving program 32 informs the server 1 of the package ID of the article delivery of which is completed and the date and hour of the completing of the delivery. The order in which ST302 and ST303 are performed may be reversed.

In ST304, the deliverer terminal 3 repeats the process of ST302 through ST304 until delivery of all of the articles for the shipping of which instructions were given, that is to say, all of the articles about which information is stored in the delivery data 31 is judged to be complete.

In ST108, the server 1 receives notification of the package ID and the date and hour of the completing of delivery sent in ST303. In ST 109, the registering program 13 on the server 1 which received notification of the package ID and the date and hour of the completing of delivery in ST 108 searches the package data 11 on the basis of the package ID and updates the Date and Hour of Delivery Completion field of an article corresponding to the package ID to the date and hour of the completing of delivery which it was informed of.

Then the message sending program 14 refers to the Mail Address of Receiver field and Message field of the article the Date and Hour of Delivery Completion field of which was updated. In ST110, the message sending program 14 sends data stored in the Message field to the mail address of a receiver, which it referred to, via the network 2.

The process shown in Fig. 4 enables the server 1 to send an electronic message registered to send to a receiver when an article is delivered to the receiver.

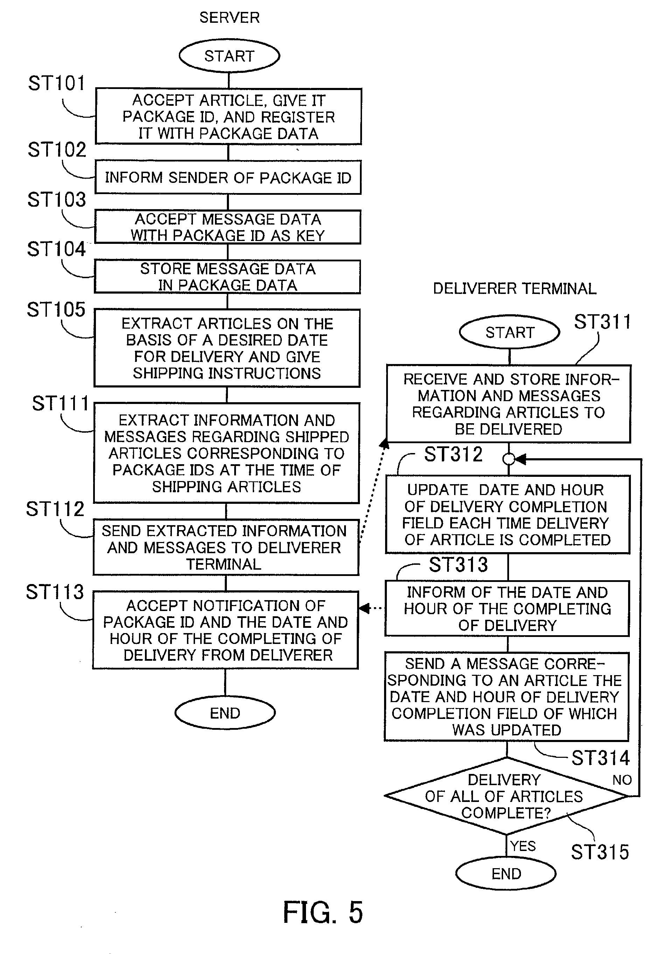

Now, a process performed in the case of a message being sent by the deliverer terminal 3 will be described as a second example with reference to Fig. 5. Fig. 5 is a flow chart for describing a process from accepting a request to deliver an article to sending an electronic message to a receiver that the server 1 and deliverer terminal 3 according to the present invention perform in concert. A process performed in ST101 through ST105 in Fig. 5 is the same as that performed in ST101 through ST105 in Fig. 4, so descriptions of it will be omitted.

As a result of the process of ST101 through ST105 shown in Fig. 5, information regarding articles to be delivered and electronic messages are registered and information regarding articles to be delivered on the day is extracted.

It is assumed that, in ST105, the package managing program 15 gives instructions to ship articles. Then, in ST111, the message sending program 14 detects the instructions to ship articles and extracts package IDs, the names of senders, the names of receivers, the addresses of the receivers, desired dates and hours for delivery, the mail addresses of the receivers, and messages as information regarding the articles from the package data 11 with package IDs included in the shipping instructions as keys. In ST112, the message sending program 14 sends this information to the deliverer terminal 3 of each deliverer on the basis of information for identifying deliverers included in the shipping instructions. In ST311, the delivery data sending/receiving program 32 on the deliverer terminal 3 receives the information sent by the message sending program 14 in ST112 and the management program 33 stores the information received by the delivery data sending/receiving program 32 in the delivery data 31.

Between ST112 and ST113 on the server 1 side, practical delivery operations will be conducted by a deliverer through the process of ST311 through ST315 on the deliverer terminal 3 side. A deliverer delivers articles on the basis of information regarding delivery the deliverer terminal 3 received in ST311. In ST312, each time delivery of an article is completed, the deliverer terminal 3 carried by a deliverer accepts information for specifying the article and information indicating the date and hour of the completing of delivery of the article. The management program 33 updates the Date and Hour of Delivery Completion field of the article in the delivery data 31 to the date and hour of the completing of the delivery the deliverer terminal 3 accepted. In ST313, the delivery data sending/receiving program 32 informs the server 1 of the package ID of the article delivery of which is completed and the date and hour of the completing of the delivery.

In ST314, the delivery data sending/receiving program 32 refers to data stored in the Mail Address of Receiver field and Message field of the article of which the Date and Hour of Delivery Completion field in the delivery data 31 was updated, and sends the data stored in the Message field to the mail address of a receiver, which it referred to, via the network 2.

The deliverer terminal 3 sends a message to a receiver via the network 2. In addition, to give a message to a receiver who received an article, the deliverer terminal 3 can, for example, print it by a printer, display it on a display, or output it from a speaker as voice. These printer, display, and speaker are output means the deliverer terminal 3 has.

In ST315, the deliverer terminal 3 repeats the process of ST312 through ST315 until delivery of all of the articles for the shipping of which instructions were given, that is to say, all of the articles about which information is stored in the delivery data 31 is judged to be complete.

In ST 113, the registering program 13 on the server 1 which received notification of the package ID and the date and hour of the completing of delivery sent in ST 313 searches the package data 11 on the basis of the package ID and updates the Date and Hour of Delivery Completion field of an article corresponding to the package ID to the date and hour of the completing of delivery which it was informed of.

The process shown in Fig. 5 enables the deliverer terminal 3 to send an electronic message registered to send to a receiver when an article is delivered to the receiver.

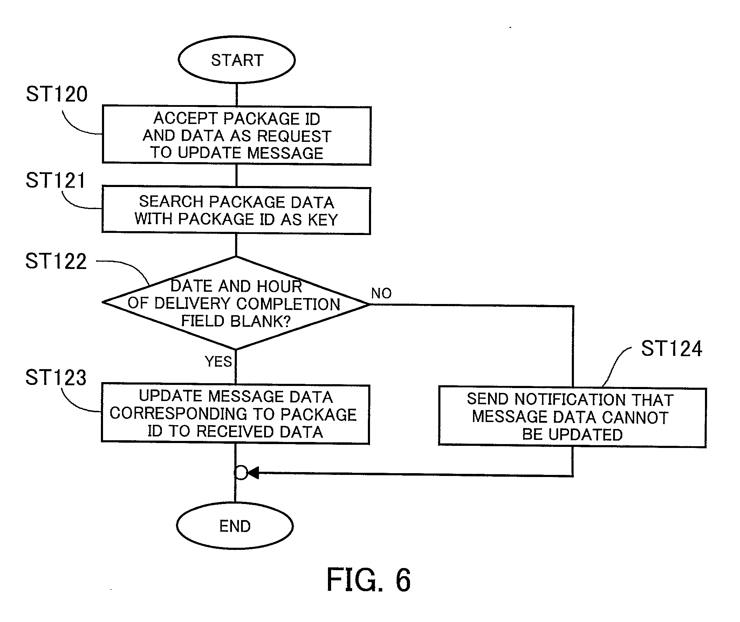

Now, a process performed by the server 1 in the case of updating an electronic message once registered will be described with reference to Fig. 6.

In ST120, the accepting program 12 on the server 1 accepts a package ID and new electronic message from the sending/receiving program 41 on the sender terminal 4 as a request to update an electronic message that has already been registered. In ST121, the registering program 13 searches the package data 11 with the accepted package ID as a key.

If the package ID is found, the procedure proceeds to ST122. That is to say, whether or not the Date and Hour of Delivery Completion field corresponding to the package ID is blank will be checked. If the Date and Hour of Delivery Completion field is blank, then a message corresponding to the article has not yet been sent to the receiver terminal 5. The updating of the message therefore is judged to be possible and the procedure proceeds to ST123. In ST123, the registering program 13 updates the Message field in the package data 11 corresponding to the package ID by the use of the new message data accepted in ST120.

If the date and hour of the completing of delivery has already been registered in the Date and Hour of Delivery Completion field in ST122, then a message has already been sent to the receiver terminal 5. The updating of the message therefore is judged to be impossible and the procedure proceeds to ST124. In ST124, notification that the message cannot be updated will be sent to the sender terminal 4.

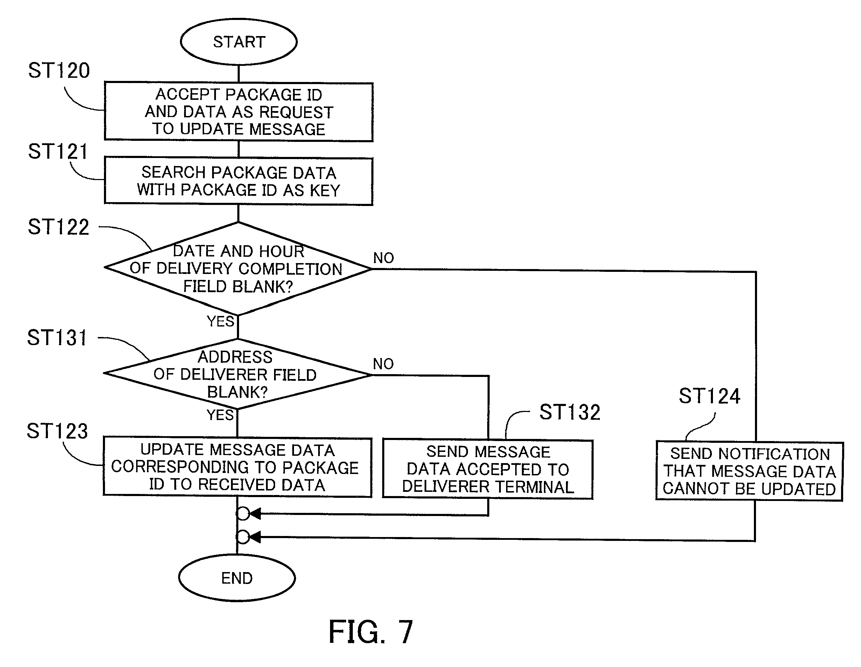

Now, a process performed by the server 1 in the second example shown in Fig. 5 in the case of updating an electronic message once registered will be described with reference to Fig. 7. A process performed in ST120 through ST122 in Fig. 7 is the same as that performed in ST120 through ST122 in Fig. 6, so descriptions of it will be omitted.

If the Date and Hour of Delivery Completion field is judged to be blank in ST122 on the flow chart shown in Fig. 7, then the procedure proceeds to ST131. In ST131, whether or not the Address of Deliverer field corresponding to a package ID is blank is checked. If the Address of Deliverer field is blank, shipping instructions have not been given yet and message data is only managed on the server 1. The updating of the message data therefore is judged to be possible and the procedure proceeds to ST123. This is the same with Fig. 6. In ST123, the registering program 13 updates the Message field in the package data 11 corresponding to the package ID by the use of the new message data accepted in ST120.

If the address of the deliverer terminal 3 has already been registered in the Address of Deliverer field in ST131, shipping instructions have already been given and message data has been sent to the deliverer terminal 3. The procedure therefore proceeds to ST132. In ST132, the message sending program 14 sends the message data accepted in ST120 to the deliverer terminal 3 registered in the Address of Deliverer field. The new message data sent is received by the delivery data sending/receiving program 32 on the deliverer terminal 3 and is registered with the delivery data 31 by the management program 33 to update the Message field.

If the date and hour of the completing of delivery has already been registered in the Date and Hour of Delivery Completion field in ST122, then a message has already been sent to the receiver terminal 5. The updating of the message therefore is judged to be impossible and the procedure proceeds to ST124. In ST124, notification that the message cannot be updated will be sent to the sender terminal 4.

If a message is updated in compliance with the flow chart shown in Fig. 6 or 7, the following interactive method can be employed. In ST120, the accepting program 12 accepts only a package ID from the sender terminal 4. If the updating of data is judged to be possible in ST122 in Fig. 6 or in ST131 in Fig. 7, the message sending program 14 sends message data which has been associated with the package ID and registered to the sender terminal 4 via the network 2 to output the message data to the output means of the sender terminal 4. Then a request for editing to update any portion of the message data will be accepted from the sender terminal 4.

By performing the process shown in Fig. 6 or 7, the server 1 gives permission to update an electronic message which has not yet been sent to receiver terminal 5. As a result, data can be updated.

The present invention is not limited to the structure described above. Arrangements other than the one shown in Fig. 8 may be adopted. For example, the sender terminal 4 may be installed in a business office of the delivery company 01, not in the home of the sender 04.

Moreover, when an electronicmessage is sent to a receiver, additional information which informs that an article has been delivered to the receiver may be sent along with the electronic message. By doing so, the receiver himself/herself who receives the electronic message will know that an article directed to him/her has reached his/her home and that he/she has received a message regarding the article, even if, for example, he/she was absent from home and a member of his/her family being at home then received the article in his/her place .

To provide electronic message delivery services as real business by the use of a method for delivering messages according to the present invention, means necessary for delivery companies to gain profits by, for example, charging a fee, separately from a fee for delivering an article, to a sender who made a request to send an electronic message may be added to the present invention.

The server 1 is a computer the whole of which is controlled by a central processing unit (CPU) not shown. A random access memory (RAM), a hard disk drive (HDD), a graphics processing section, an input interface, a communication interface, and the like are connected to the CPU via buses.

The RAM temporarily stores an operating system (OS) program and at least part of other programs executed by the CPU. The RAM stores various pieces of data necessary for the CPU to perform processes. The HDD stores the OS, other programs, and data.

A monitor is connected to the graphics processing section. The graphics processing section causes the monitor in compliance with instructions from the CPU to display an input screen etc. A keyboard, a mouse, and the like are connected to the input interface. The input interface sends signals sent from the keyboard, mouse, etc. to the CPU via a bus.

The communication interface is connected to the network 2. The communication interface transfers data, such as electronic mail and Web screens, among the deliverer terminal 3, sender terminal 4, and receiver terminal 5 via the network 2.

The hardware configuration of the server 1 has been described above. The deliverer terminal 3, sender terminal 4, and receiver terminal 5 are computers with the same hardware configuration as that of the server 1.

By executing a program for delivering messages according to the embodiment of the present invention on the above computer, the computer can serve as a message delivery apparatus.

The contents of a function which each of the above computers should have can be described in a program recorded on a record medium which can be read with a computer. The above function can be achieved with a computer by executing this program on the computer. A record medium which can be read with a computer can be a magnetic recording device, a semiconductor memory, or the like. In order to place this program on the market, it can be stored on a portable record medium, such as a compact disk read only memory (CD-ROM) or a flexible disk. Alternatively, it can be stored in a memory of a computer connected via a network and be transferred to another computer via a network. When this program is executed on a computer, it is stored on a hard disk etc. in the computer and is loaded into a main memory.

As has been described in the foregoing, in the present invention, an article sent from a sender to a receiver and an electronic message to be sent at the same time as the article are associated with each other and are managed on the delivery company side. This enables to deliver an electronic message when an article reaches a receiver.

Furthermore, in the present invention, an electronic message sent from the sender of an article to the receiver of the article is managed by a server on the delivery company side. A message therefore can be updated before it is delivered.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A method for delivering messages, the method comprising the steps of:
accepting an article to be delivered;
accepting an electronic message by associating the electronic message with the article; and
sending the electronic message associated with the article to a receiver of the article at the time of receiving notification that delivery of the article is completed.

2. A method for delivering messages, the method comprising the steps of:
accepting an article to be delivered;
accepting an electronic message by associating the electronic message with the article; and
sending the electronic message associated with the article to a terminal of a deliverer who delivers the article at the time of shipping the article to deliver.

3. A method for delivering messages, the method comprising the steps of:
accepting information regarding an article to be delivered and an electronic message associated with the article from a server; and
sending the electronic message associated with the article to a receiver of the article at the time of accepting input which indicates that delivery of the article is completed.

4. A method for delivering messages, the method comprising the steps of:
accepting an article to be delivered;
accepting an electronic message by associating the electronic message with the article; and
permitting updating the electronic message associated with the article before receiving notification that delivery of the article is completed.

5. A program executed on a computer for delivering messages, the program comprising:
a section for causing the computer to function as a unit for accepting an article to be delivered;
a section for causing the computer to function as a unit for accepting an electronic message by associating the electronic message with the article; and
a section for causing the computer to function as a unit for sending the electronic message associated with the article to a receiver of the article at the time of receiving notification that delivery of the article is completed.

6. A program executed on a computer for delivering messages, the program comprising:
a section for causing the computer to function as a unit for accepting an article to be delivered;
a section for causing the computer to function as a unit for accepting an electronic message by associating the electronic message with the article; and
a section for causing the computer to function as a unit for sending the electronic message associated with the article to a terminal of a deliverer at the time of shipping the article to deliver.

7. A program executed on a computer for delivering messages, the program comprising:
a section for causing the computer to function as a unit for accepting information regarding an article to be delivered and an electronic message associated with the article from a server; and
a section for causing the computer to function as a unit for sending the electronic message associated with the article to a receiver of the article at the time of accepting input which indicates that delivery of the article is completed.

8. A program executed on a computer for delivering messages, the program comprising:
a section for causing the computer to function as a unit for accepting an article to be delivered;
a section for causing the computer to function as a unit for accepting an electronic message by associating the electronic message with the article; and
a section for causing the computer to function as a unit for permitting updating the electronic message associated with the article before receiving notification that delivery of the article is completed.

9. A unit for delivering messages, the unit comprising:
a section for accepting information regarding an article to be delivered and an electronic message associated with the article from a server; and
a section for sending the electronic message associated with the article to a receiver of the article at the time of accepting input which indicates that delivery of the article is completed.

10. A method for delivering messages, the method comprising the steps of:
sending an identifier for an article,delivery of which is requested,and an electronic message directed to a receiver of the article to a server;
sending the server a request to update the electronic message sent; and
causing the server to update the electronic message on the basis of the sent request for update in the case of delivery of an article associated in the server with an identifier included in the request for update being judged by the server not complete.
